# EUROPEAN PATENT APPLICATION

(11) **EP 4 708 552 A1**
(43) Date of publication of application: **11.03.2026**
(21) Application number: 24882713.1
(22) Date of filing: 14.10.2024
(51) Int. Cl.: H01M 50/581, H01M 50/519, H01M 50/507, H01M 50/271, H02H 7/18

(54) **BATTERY MODULE**

(30) Priority: 23.10.2023 KR 20230142124
(71) Applicant: LG Energy Solution, Ltd., Seoul 07335 (KR)
(72) Inventor: UHM, Jae Yong, Daejeon 34122 (KR)
(74) Representative: Hoffmann Eitle
(86) International application number: PCT/KR2024/015478
(87) International publication number: WO 2025/089686

(57) **Abstract**

A battery module of the present invention includes: a stack provided as one or more battery cells; a case in which the stack is accommodated; and a PCB assembly provided inside the case and configured to electrically connect a first busbar provided at one side of the stack to a second busbar provided at the other side of the stack or cut off electricity so as not to flow when current exceeding a preset value flows, wherein the PCB assembly includes: a first connection cable connected to the first busbar; a second connection cable connected to the second busbar; and a PCB provided with a circuit configured to electrically connect the first connection cable to the second connection cable and a fuse configured to cut off the electricity so as not to flow through the circuit when the current exceeding the preset value flows through the circuit.

## Description

### TECHNICAL FIELD

### CROSS-REFERENCE TO RELATED APPLICATION

The present application claims the benefit of the priority of Korean Patent Application No. 10-2023-0142124, filed on October 23, 2023, which is hereby incorporated by reference in its entirety.

### TECHNICAL FIELD

The present invention relates to a battery module having a built-in fuse for blocking overcurrent, and more particularly, to a battery module having a structure that facilitates replacement of a fuse.

### BACKGROUND ART

In general, secondary batteries refer to chargeable and dischargeable, unlike primary batteries that are not chargeable. The secondary batteries are being widely used for mobile phones, notebook computers, camcorders, power storage device, electric vehicles, and the like.

Such a secondary battery is classified into a can type secondary battery in which an electrode assembly is built in a metal can and a pouch type secondary battery in which an electrode assembly is built in a pouch. The pouch type secondary battery comprises an electrode assembly in which an electrode and a separator are alternately stacked, and a pouch accommodating the electrode assembly.

As interest in the depletion of fossil fuels and environmental pollution has increased recently, research on hybrid and electric vehicles is being actively conducted, and the hybrid and electric vehicles are equipped with battery modules.

That is, the battery module includes a plurality of secondary batteries, and the plurality of secondary batteries are connected in series or parallel to increase in capacity and output.

However, the battery module according to the related art had a problem in that the battery module is exploded or ignited when overcurrent occurs, resulting in casualties.

### DISCLOSURE OF THE INVENTION

### TECHNICAL PROBLEM

An object of the present invention is to provide a battery module capable of preventing explosion or ignition by including a fuse that cuts off current when overcurrent occurs.

In particular, an object of the present invention is to enable rapid reuse of a battery module by easily replacing a fuse through a cover provided in a case.

### TECHNICAL SOLUTION

A battery module of the present invention may include: a stack provided as one or more battery cells; a case in which the stack is accommodated; and a PCB assembly provided inside the case and configured to electrically connect a first busbar provided at one side of the stack to a second busbar provided at the other side of the stack or cut off electricity so as not to flow when current exceeding a preset value flows, wherein the PCB assembly may include: a first connection cable connected to the first busbar; a second connection cable connected to the second busbar; and a PCB provided with a circuit configured to electrically connect the first connection cable to the second connection cable and a fuse configured to cut off the electricity so as not to flow through the circuit when the current exceeding the preset value flows through the circuit.

The circuit may include a first circuit connected to the first connection cable and a second circuit connected to the second connection cable, and the fuse is configured to electrically connect the first circuit to the second circuit or is melted due to heat generated while the current exceeding the preset value flows to cut off the electricity so as not to flow through the first and second circuits.

The PCB may include: a first connector to which a connector connection part of the first connection cable is coupled; and a second connector to which a connector connection part of the second connection cable is coupled.

The PCB assembly may be provided between a cover plate of the case and the stack.

The cover plate may be provided with an open hole through which the PCB is confirmed from the outside.

The open hole may be provided in the cover plate facing the PCB.

The open hole may have a size greater than that of the PCB.

A transparent or translucent cover may be provided on the open hole.

The cover may be detachably coupled to the open hole.

The cover may be provided with a hinge part rotatably coupled to the cover plate disposed at one side of the open hole, and a fixing part fixed to be hung on the cover plate disposed at the other side of the open hole.

The cover may be made of a heat-resistant material.

Each of the first connection cable and the second connection cable may be provided as a flexible flat case (FFC).

### ADVANTAGEOUS EFFECTS

The battery module of the present invention may be provided with the PCB assembly having the fuse on the connection cable that electrically connects the first busbar to the second busbar. Due to this feature, when the overcurrent occurs in the battery module, the fuse may be melted to quickly block the connection between the first busbar and the second busbar, thereby enhancing the safety of the battery module.

Particularly, in the battery module of the present invention, the PCB assembly may be built into the case and be provided to be exposed to the outside through the open hole formed in the case. Due to this feature, the PCB assembly may be protected from the external impact and allow the easy replacement of the PCB assembly through the open hole. As a result, there may be easy of the maintenance and rapid reuse of the battery module.

In addition, in the battery module of the present invention, the cover may be provided on the open hole. Due to this feature, the foreign substances may be prevented from being introduced into the case. Particularly, the cover may be made of transparent or translucent material. This feature, the fuse state of the PCB assembly may be confirmed from the outside without opening the cover.

### BRIEF DESCRIPTION OF THE DRAWINGS

FIG. 1 is a perspective view of a battery module according to a first embodiment of the present invention.
FIG. 2 is a perspective view of the battery module from which a case is removed in FIG. 1.
FIG. 3 is a schematic plan view of the battery module of FIG. 2 when viewed from the top.
FIG. 4 is a perspective view illustrating a PCB assembly of the battery module according to the first embodiment of the present invention.
FIG. 5 is a perspective view illustrating a coupling state of a connection cable and a PCB of the PCB assembly in FIG. 4.
FIG. 6 is a plan view illustrating a state in which a fuse is disconnected by overcurrent in the battery module according to the first embodiment of the present invention.
FIG. 7 is a plan view of the battery module according to the first embodiment of the present invention.
FIG. 8 is an enlarged view of a portion A illustrated in FIG. 7.
FIG. 9 is a cross-sectional view of FIG. 8.
FIG. 10 is a cross-sectional view of a battery module according to a second embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Battery module according to first embodiment of the present invention]

A battery module according to the first embodiment of the present invention may include a PCB assembly provided with a fuse that quickly cuts off electricity when overcurrent occurs to prevent accidents from occurring in advance.

Particularly, the PCB assembly provided with the fuse may be provided inside a case that accommodates a battery cell, and an open hole may be defined in the case to expose the PCB assembly to the outside to protect the PCB assembly from an external impact and allow easy replacement of the PCB assembly through the open hole. As a result, there are easy of maintenance and rapid reuse of the battery module.

Hereinafter, a battery module according to a first embodiment of the present invention will be described in detail with reference to the attached drawings.

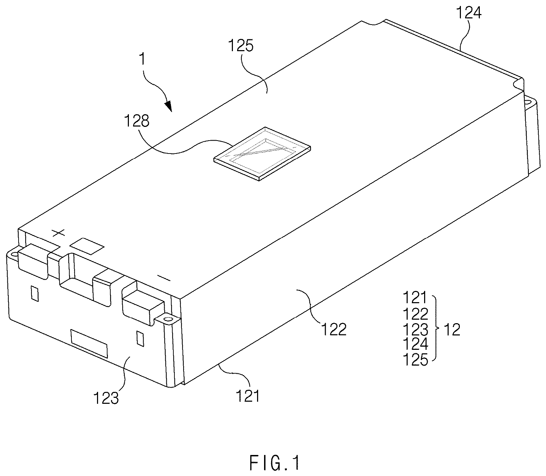

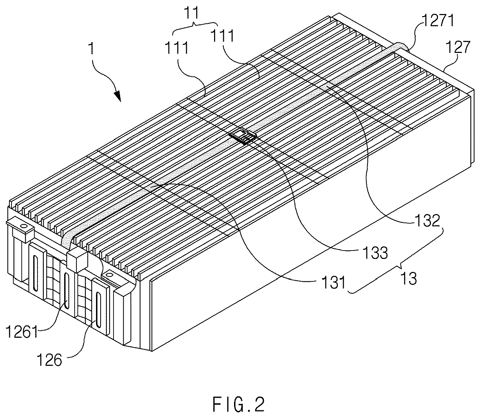

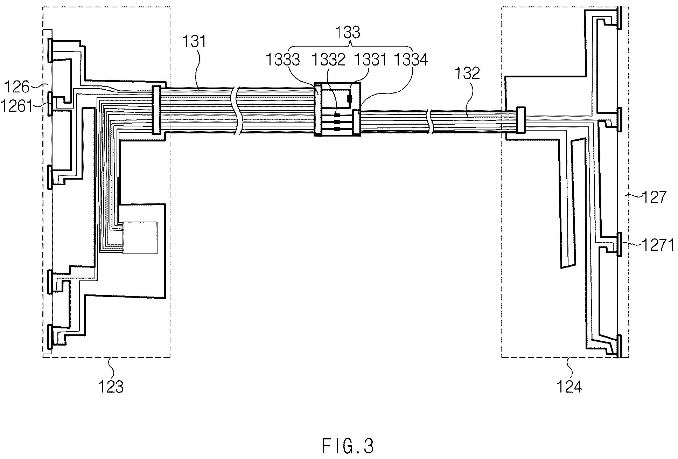

FIG. 1 is a perspective view of a battery module according to a first embodiment of the present invention, FIG. 2 is a perspective view of the battery module from which a case is removed in FIG. 1, and FIG. 3 is a schematic plan view of the battery module of FIG. 2 when viewed from the top.

The battery module 1 according to the first embodiment of the present invention includes a stack 11, a case 12, and a PCB assembly 13 as illustrated in FIGS. 1 to 3.

### Stack

The stack 11 may be provided as one or more battery cells 111, and preferably be provided as a plurality of battery cells 111. That is, the plurality of battery cells 111 are connected in series or parallel to increase in capacity and output.

Here, each of the battery cells 111 includes an electrode assembly and a pouch that accommodates the electrode assembly, and the electrode assembly has a structure in which positive and negative electrodes are alternately disposed with a separator therebetween.

### Case

The case 12 has a structure that accommodates the battery cell 111. That is, the case 12 includes a lower plate 121 on which the battery cell 111 is disposed, a side plate 122 that protects a side portion of the battery cell 111, a first end plate 123 provided in front of the battery cell 111, a second end plate 124 provided in rear of the battery cell 111, and a cover plate 125 provided on an upper portion of the battery cell 111.

The case 12 is provided with a busbar assembly that connects the plurality of battery cells 111 in series or parallel.

The busbar assembly includes a first busbar frame 126 provided with a first busbar 1261 to which one electrode provided in the battery cell 111 is connected, and a second busbar frame 127 provided with a second busbar 1271 to which remaining one electrode is connected.

Here, the first busbar frame 126 may be provided on an inner surface of the first end plate 123 facing the battery cell 111, and the second busbar frame 127 may be provided on an inner surface of the second end plate 124 facing the battery cell 111.

### PCB assembly

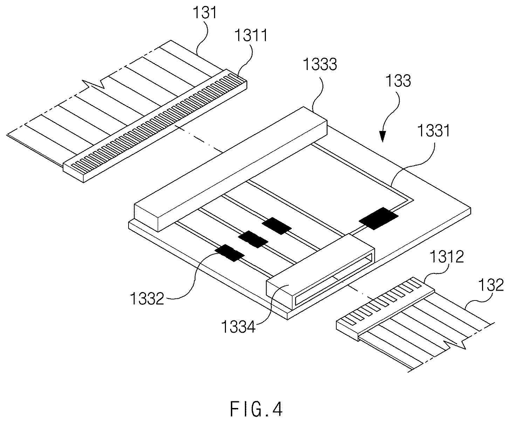

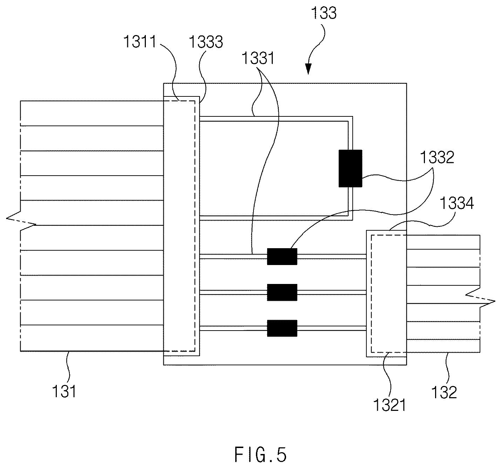

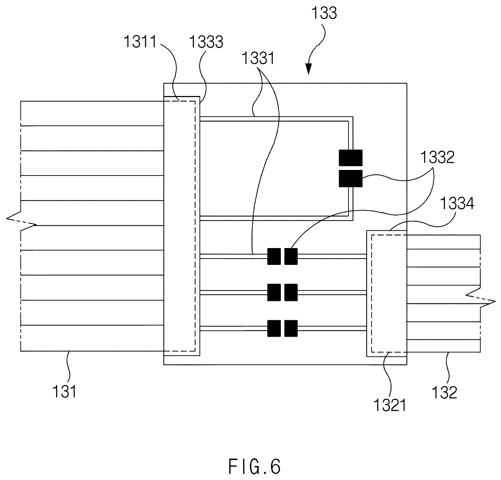

FIG. 4 is a perspective view illustrating a PCB assembly of the battery module according to the first embodiment of the present invention, FIG. 5 is a perspective view illustrating a coupling state of a connection cable and a PCB of the PCB assembly in FIG. 4, and FIG. 6 is a plan view illustrating a state in which a fuse is disconnected by overcurrent in the battery module according to the first embodiment of the present invention.

The PCB assembly 13 is provided inside the case 12 and has a structure that electrically connects the first busbar 1261 provided at one side of the stack 11 to the second busbar 1271 provided at the other side of the stack 11, or cuts off electricity when current exceeding a preset value flows. Thus, when the overcurrent occurs in the battery module, the electricity generated in the battery module may be quickly cut off to preventing an accident in which the battery module is exploded or ignited.

For example, the PCB assembly 13 includes a first connection cable 131 connected to the first busbar 1261, a second connection cable 132 connected to the second busbar 1271, and a PCB 133 that electrically connects the first connection cable 131 to the second connection cable 132 or cuts off the electricity when the current exceeding the preset value flows.

The current exceeding the preset value may be applied differently depending on capacity of the battery cell 111 and may not be limited to a numerical value, and a fuse 1332 may be made of a material that is capable of being melted due to heat generated when the current exceeding the preset value occurs. For example, the current exceeding the preset value may be 1 ampere (A) or more, preferably 2 amperes (A) or more.

The first connection cable 131 may be coupled to a connector of a first connection board to which the first busbar 1261 is connected and thus may be electrically connected to the first busbar 1261.

The second connection cable 132 may be coupled to a connector of a second connection board to which the second busbar 1271 is connected and thus may be electrically connected to the second busbar 1271.

The PCB 133 includes a circuit 1331 (i.e., an electric circuit) that electrically connects the first connection cable 131 to the second connection cable 132, and a fuse 1332 that cuts off the electricity so as not to flow through the circuit 1331 when the current exceeding the preset value flows through the circuit 1331.

Here, the circuit 1331 includes a first circuit 1331 connected to the first connection cable 131 and a second circuit 1331 connected to the second connection cable 132. Here, the circuit 1331 is provided in plurality.

The fuse 1332 is provided between the first circuit and the second circuit and electrically connects the first circuit to the second circuit or is melted due to the heat generated when the current exceeding the preset value flows to cut off the electricity so as not to flow through the first and second circuits.

Particularly, the fuse 1332 are provided in each of the plurality of circuits 1331 to significantly improve safety.

The fuse 1332 may have a thickness, width, and length to be quickly melted at a preset temperature. For example, the fuse 1332 may have a thickness of 25 µm, a width of 0.1 mm, and a length of 1 to 3 cm.

The fuse 1332 may be provided as a metal plate. For example, the fuse 1332 may be made of at least one of copper (Cu), aluminum (Al), nickel (Ni), silver (Ag), or nichrome (Ni-Cr alloy). In addition, the fuse 1332 may be made of lead, an alloy of lead and tin, zinc, etc.

The fuse 1332 refers to a component that automatically blocks short-circuit current and overload current as a type of overcurrent protection device. That is, the fuse 1332 may be melted when the current is strong to cut off the electric circuit, thereby preventing a risk from occurring.

FIG. 6 is a plan view illustrating a state in which the fuse 1332 is disconnected by the overcurrent in the battery module according to the first embodiment of the present invention.

In summary, the first connection cable 131 and the second connection cable 132 may be electrically connected through the circuit 1331 and the fuse 1332 of the PCB 133, and when the overcurrent exceeding the preset value flows through the circuit 1331, the fuse 1332 may be melted to block a flow of electricity through the first connection cable 131 and the second connection cable 132.

The PCB assembly 13 having the above-described structure may quickly block the flow of electricity when the overcurrent flows to the battery module 1, thereby improving the safety. Particularly, the PCB assembly 13 may be provided inside the case 12 so as to be protected from an external impact, and a structure of the battery module may be designed compactly.

The PCB 133 includes a first connector 1333 to which the connector connection part of the first connection cable 131 is coupled, and a second connector 1334 to which the connector connection part of the second connection cable 132 is coupled. Thus, the first connection cable 131 and the second connection cable 132 may be easily connected to or separated from the PCB 133. This provides ease of maintenance and replacement because only the PCB 133 of the PCB assembly 13 needs to be replaced.

The PCB assembly may be provided between a cover plate 125 of the case 12 and the stack 11. Thus, space utilization inside the case 12 may significantly increase.

The battery module 100 according to the first embodiment of the present invention has a structure in which the PCB 133 provided inside the case 12 is easily replaced from the outside.

That is, the cover plate 125 may be provided with an open hole 1251 through which the PCB 133 is confirmed from the outside, and the PCB 133 provided inside the case 12 may be easily confirmed and replaced through the open hole 1251. In other words, the first connection cable 131 and the second connection cable 132, which are connected to the PCB 133, may be removed through the open hole 1251, and then, a new PCB 133 may be inserted through the open hole 1251 of the cover plate 125. Next, the first connection cable 131 and the second connection cable 132 may be respectively connected to the first connector 1333 and the second connector 1334 provided on the PCB 133 that is the new product. Then, the replacement of the PCB 133 is completed.

Thus, the battery module 100 according to the first embodiment of the present invention may easily replace the PCB 133 that is unusable due to the overcurrent with a new PCB 133.

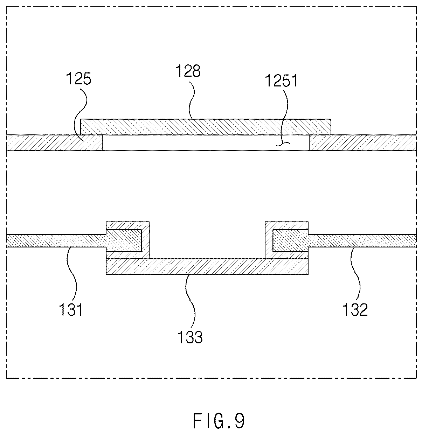

The open hole 1251 may be provided in the cover plate 125 facing the PCB 133. That is, the open hole 1251 and the PCB 133 may be disposed on the same vertical line as illustrated in FIG. 9. Thus, the PCB 133 may be easily confirmed through the open hole 1251 and be easily replaced with the new PCB 133.

Particularly, a size of the open hole 1251 may be greater than that of the PCB 133. Thus, even if an positional error occurs between the open hole 1251 and the PCB 133, the PCB 133 may be disposed to face the open hole 1251.

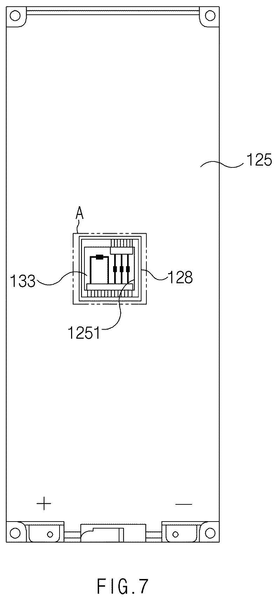

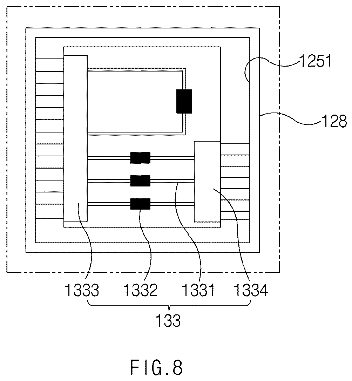

FIG. 7 is a plan view of the battery module according to the first embodiment of the present invention, FIG. 8 is an enlarged view of a portion A illustrated in FIG. 7, and FIG. 9 is a cross-sectional view of FIG. 8.

A transparent or translucent cover 128 may be provided on the open hole 1251. That is, the cover 128 may be attached to an outer surface of the cover plate 125 including the open hole 1251 to close the open hole 1251. As a result, it is possible to prevent foreign substances, etc. from being introduced into the case 12 through the open hole 1251.

The cover 128 may be made of a heat-resistant material. For example, the cover 128 may be made of polyethyleneterephthalate. Thus, it is possible to prevent an accident in which the cover 128 is melted due to the heat generated in the battery module 1.

Each of the first connection cable 131 and the second connection cable 132 may be provided as a flexible flat cable (FFC). Thus, the first connection cable 131 and the second connection cable 132 may be stably disposed in the space between the cover plate 125 and the battery cell 111.

Hereinafter, in descriptions of another embodiment of the present invention, constituents of the second embodiment having the same function as the first embodiment have been given the same reference numeral in the drawings, and thus duplicated description will be omitted.

### [Battery module according to second embodiment of the present invention]

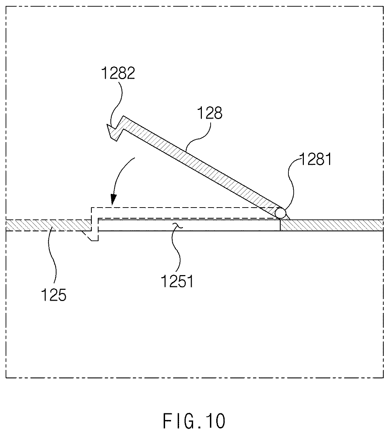

FIG. 10 is a cross-sectional view of a battery module according to a second embodiment of the present invention.

A battery module 1 according to a second embodiment of the present invention includes a case 12, and the case 12 includes a cover plate 125 having an open hole 1251. In addition, the open hole 1251 may be closed by a cover 128.

Particularly, the cover 128 may be detachably attached to the open hole 1251. Thus, the open hole 1251 may be opened or closed.

For example, the cover 128 may be provided with a hinge part 1281 that is rotatably connected to a coupling part of a cover plate 125 provided on one end and disposed at one side of the open hole 1251, and a fixing part 1282 that is provided on the other end and is fixed by being hung on a hook part provided on the cover plate 125 disposed at the other side of the open hole 1251.

Thus, the battery module 1 according to the second embodiment of the present invention may open and close the open hole 1251 as necessary to improve convenience.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

1: Battery module
11: Stack
111: Battery cell
12: Case
121: Lower plate
122: Side plate
123: First end plate
124: Second end plate
125: Cover plate
1251: Open hole
126: First busbar frame
1261: First busbar
127: Second busbar frame
1271: Second busbar
128: Cover
1281: Hinge part
1282: Fixing part
13: PCB assembly
131: First connection cable
132: Second connection cable
133: PCB
1331: Circuit
1332: Fuse
1333: First connector
1334: Second connector

## Claims

1. A battery module comprising:
a stack provided as one or more battery cells;
a case in which the stack is accommodated; and
a PCB assembly provided inside the case and configured to electrically connect a first busbar provided at one side of the stack to a second busbar provided at the other side of the stack or cut off electricity so as not to flow when current exceeding a preset value flows,
wherein the PCB assembly comprises:
a first connection cable connected to the first busbar;
a second connection cable connected to the second busbar; and
a PCB provided with a circuit configured to electrically connect the first connection cable to the second connection cable and a fuse configured to cut off the electricity so as not to flow through the circuit when the current exceeding the preset value flows through the circuit.

2. The battery module of claim 1, wherein the circuit comprises a first circuit connected to the first connection cable and a second circuit connected to the second connection cable, and
the fuse is configured to electrically connect the first circuit to the second circuit or is melted due to heat generated while the current exceeding the preset value flows to cut off the electricity so as not to flow through the first and second circuits.

3. The battery module of claim 1, wherein the PCB comprises:
a first connector to which a connector connection part of the first connection cable is coupled; and
a second connector to which a connector connection part of the second connection cable is coupled.

4. The battery module of claim 1, wherein the PCB assembly is provided between a cover plate of the case and the stack.

5. The battery module of claim 4, wherein the cover plate is provided with an open hole through which the PCB is confirmed from the outside.

6. The battery module of claim 5, wherein the open hole is provided in the cover plate facing the PCB.

7. The battery module of claim 6, wherein the open hole has a size greater than that of the PCB.

8. The battery module of claim 6, wherein a transparent or translucent cover is provided on the open hole.

9. The battery module of claim 8, wherein the cover is detachably coupled to the open hole.

10. The battery module of claim 8, wherein the cover is provided with a hinge part rotatably coupled to the cover plate disposed at one side of the open hole, and a fixing part fixed to be hung on the cover plate disposed at the other side of the open hole.

11. The battery module of claim 8, wherein the cover is made of a heat-resistant material.

12. The battery module of claim 2, wherein each of the first connection cable and the second connection cable is provided as a flexible flat case (FFC).
